# FASCICULE DE BREVET EUROPEEN

(11) **EP 4 349 201 B1**
(45) Date de publication et mention de la délivrance du brevet: **30.10.2024**
(21) Numéro de dépôt: 23200117.2
(22) Date de dépôt: 27.09.2023
(51) Int. Cl.: A43B 13/02, A43B 13/12, A43B 13/14, A43B 13/18

(54) **SEMELLE DE CHAUSSURE**
SOHLE EINES SCHUHS
SOLE OF A SHOE

(30) Priorité: 07.10.2022 FR 2210270
(43) Date de publication de la demande: 10.04.2024
(73) Titulaire: Salomon S.A.S., 74370 Metz-Tessy (FR)
(72) Inventeur: GIANDOLINI, Marlène, 74570 THORENS-GLIERES (FR); COUDURIER, Laurent, 74960 ANNECY (FR); FAVRE, Lionel, 74600 ANNECY (FR)
(74) Mandataire: Lapierre, Stéphane

(56) Documents cités:
- US-A1- 2004 111 920
- US-A1- 2017 079 373

## Description

La présente invention concerne une semelle de chaussure de sport.

L'invention vise une structure de semelle permettant d'optimiser la déformation de la semelle à l'impact, d'améliorer le déroulé du pied au sol ainsi que la propulsion. Une des caractéristiques de la semelle ayant un impact sur ces objectifs est sa résilience, c'est-à-dire, sa capacité à absorber et restituer de l'énergie. La résilience correspond au rapport entre l'énergie rendue et l'énergie appliquée au matériau. Elle caractérise le « rebond » de la chaussure, sa capacité à restituer de l'énergie pour faciliter la propulsion. Notons également qu'augmenter la résilience de la matière composant la semelle permet d'améliorer l'économie de course, c'est-à-dire la quantité d'oxygène consommée par le coureur par unité de distance, le principal critère de performance en course à pied sur route. La résilience de la semelle dépend de la nature des matériaux utilisés, de la géométrie de ses composants ainsi que l'agencement des différents composants constitutifs.

Plusieurs documents, comme la demande WO2017/058420, décrivent des semelles intégrant une plaque rigide associée à une ou plusieurs couches amortissantes. La plaque rigide s'étend généralement sur toute la longueur de la semelle. Cette plaque s'avère être un composant efficace pour améliorer l'économie de course du fait qu'elle rigidifie la semelle au niveau des métatarses, limitant alors la flexion de ces derniers et donc la perte d'énergie générée lors de la flexion de l'articulation métatarso-phalangienne. Cependant, la présence d'une plaque rigide au niveau du talon va réduire l'amortissement à l'impact (pour une course avec attaque talon). US 2017/079373 A1 (D1) divulgue un semelage externe d'une chaussure.

Le but de l'invention est de proposer une semelle de chaussure améliorée.

Un but est de proposer une semelle optimisant la déformation de la matière à l'impact talon afin d'accroitre la résilience.

Un autre but est de proposer une semelle permettant d'accélérer le déroulé du pied au sol lors de la phase de transition entre l'impact et la propulsion.

Un autre but est de proposer une semelle ayant une bonne stabilité latérale / amortissement, notamment lors de l'impact (phase de réception).

L'invention propose un semelage externe d'une chaussure comportant une couche d'amortissement supérieure comprenant une surface interface avec une tige de la chaussure, la surface interface s'étendant sur une longueur de tige, entre une extrémité antérieure et une extrémité postérieure, le semelage externe comprenant une lame rigide, présentant un module d'élasticité supérieur à 750 MPa, intercalée entre la couche d'amortissement supérieure et une couche d'amortissement inférieure, la lame rigide étant disposée au moins en partie dans une moitié antérieure du semelage externe.

Le semelage externe est caractérisé par le fait que qu'il comprend un support rigide, présentant un module d'élasticité supérieur à 100 MPa, comportant
- un pont inférieur couvrant une partie de la surface inférieure de la couche d'amortissement supérieure, le pont inférieur s'étendant sensiblement sur toute la largeur de cette couche d'amortissement supérieure au niveau d'au moins un segment transversal d'une zone centrale localisée entre 30% et 50% de de la longueur de tige, depuis l'extrémité postérieure de la surface interface,
- une aile latérale couvrant une partie de la surface latérale de la couche d'amortissement supérieure, la partie de recouvrement couvrant au moins une bande de largeur d'au moins dix millimètres, cette bande s'étendant en longueur, vers l'arrière, depuis le pont inférieur jusqu'au moins un plan frontal du semelage externe distant de 20% de la longueur de tige de l'extrémité postérieure de la surface interface.

Comme indiqué précédemment, la lame rigide au niveau de la partie antérieure du semelage externe permet l'économie de course du fait qu'elle rigidifie la semelle au niveau des métatarses, limitant alors la flexion de ces derniers et donc la perte d'énergie générée lors de la flexion de l'articulation métatarso-phalangienne. Pour énergiser davantage la foulée, le semelage externe comprend un support rigide muni d'une aile latérale qui va contenir l'expansion latérale de la couche d'amortissement supérieur, au niveau du talon. La couche amortissante est alors contrainte à l'impact, au moment de la phase de réception, ce qui va améliorer la résilience de la semelle au niveau du talon. Ainsi, on va limiter la perte d'énergie au moment de l'impact. La semelle étant plus résiliente, on aura un effet de rebond plus important qui va aider à la propulsion, accélérant le basculement vers l'appui avant, au niveau des métatarses. L'association de la lame rigide avec le support rigide permet d'améliorer le déroulé du pied au sol ainsi que la propulsion. De plus, en limitant l'écrasement de la semelle au niveau du talon, on réduit les mouvements latéraux de la semelle ce qui apporte un peu plus de stabilité latérale.

Selon des aspects avantageux mais non obligatoires de l'invention, un tel semelage externe de chaussure peut incorporer une ou plusieurs des caractéristiques suivantes, prises dans toute combinaison techniquement admissible :
- Le support rigide comprend une aile médiale couvrant au moins une partie de la surface médiale de la couche d'amortissement supérieure, localisée entre 30% et 50% de de la longueur de tige, depuis l'extrémité postérieure de la surface interface, la partie de recouvrement remontant le long de la surface médiale de la couche d'amortissement supérieure, au moins localement, sur une hauteur d'au moins dix millimètres depuis le pont inférieur.
- Le support rigide comprend une aile médiale couvrant une partie de la surface médiale de la couche d'amortissement supérieure, la partie de recouvrement couvrant au moins une bande de largeur d'au moins dix millimètres, cette bande s'étendant en longueur, vers l'arrière, depuis le pont inférieur jusqu'au moins un plan frontal du semelage externe distant de 20% de la longueur de tige de l'extrémité postérieure de la surface interface.

- La lame rigide et le support rigide sont solidarisés l'une à l'autre.
- La lame rigide et le support rigide forment une pièce unitaire.
- La rigidité de lame rigide est au moins cinq fois supérieure à la rigidité des ailes du support rigide.
- Les ailes du support rigide sont constituées d'un polymère thermoplastique parmi : un PolyAmide (PA), un Polyuréthane ThermoPlastique (TPU) ou un matériau composite composé d'une matrice thermoplastique/thermodurcissable (PA, TPU, epoxy...) combiné avec des fibres (verre, carbone, lin...).
- Le bord inférieur des ailes du support rigide est distant du bord de la face inférieure du semelage externe, d'une distance toujours supérieure à cinq millimètres.
- Le bord supérieur des ailes du support rigide est distant du bord de la face supérieur du semelage externe, d'une distance toujours supérieure à huit millimètres.
- Le support rigide comprend une partie intercalée entre la couche d'amortissement supérieure et une couche d'amortissement inférieure arrière.
- Au moins une des ailes du support rigide comprend un rebord s'étendant sensiblement horizontalement, vers le centre du semelage, depuis le bord inférieur de l'aile.
- La face inférieure du semelage externe présente
   - une première partie convexe arrière au niveau du talon définissant une zone de contact arrière avec le sol lorsque la semelle est posée à plat sur le sol. Cette zone de contact arrière se présente sous la forme d'une bande de contact transversale de largeur inférieure à vingt millimètres, selon la direction longitudinal X du semelage externe. Le centre de la zone de contact arrière est positionnée dans une zone d'appui arrière localisée entre 10% et 25% de la longueur de tige, depuis l'extrémité postérieure de la surface interface supérieure,
   - une deuxième partie convexe avant au niveau du l'avant-pied définissant une zone de contact avant avec le sol lorsque la semelle est posée à plat sur le sol. Cette zone de contact avant se présente sous la forme d'une bande de contact transversale de largeur inférieure à vingt millimètres, selon la direction longitudinal X du semelage externe. Le centre de la zone de contact avant est positionné dans une zone d'appui avant localisée entre 35% et 50% de la longueur de tige, depuis l'extrémité antérieure de la surface interface supérieure.
- La couche d'amortissement inférieur comporte une couche d'amortissement inférieur avant et une couche d'amortissement arrière, reliées entre elles pour former une seule et même pièce unitaire monobloc.

L'invention concerne également une chaussure de sport équipée d'un semelage externe tel que défini précédemment.

D'autres caractéristiques et avantages de l'invention seront mieux compris à l'aide de la description qui va suivre, en regard des dessins annexés illustrant, selon des formes de réalisation non limitatives, comment l'invention peut être réalisée, et dans lequel :
[Fig. 1] La figure 1 est une vue de dessus en perspective avant d'une chaussure pour pied gauche selon un premier mode de réalisation de l'invention.
[Fig. 2] La figure 2 est une vue éclatée de la chaussure de la figure 1.
[Fig. 3] La figure 3 est une vue de côté, côté latéral, de la chaussure de la figure 1.
[Fig. 4] La figure 4 est une vue de côté, côté médial, de la chaussure de la figure 1.
[Fig. 5] La figure 5 est une vue de dessous de la chaussure de la figure 1.
[Fig. 6] La figure 6 est une vue en coupe longitudinale selon VI-VI de la figure 5.
[Fig. 7] La figure 7 est une vue en coupe transversale selon VII-VII de la figure 5.
[Fig. 8] La figure 8 est une vue en coupe transversale selon VIII-VIII de la figure 5.
[Fig. 9] La figure 9 est une vue de dessus du châssis seul.
[Fig. 10] La figure 10 est la vue de la figure 3 illustrant la position des appuis et de la plaque rigide.

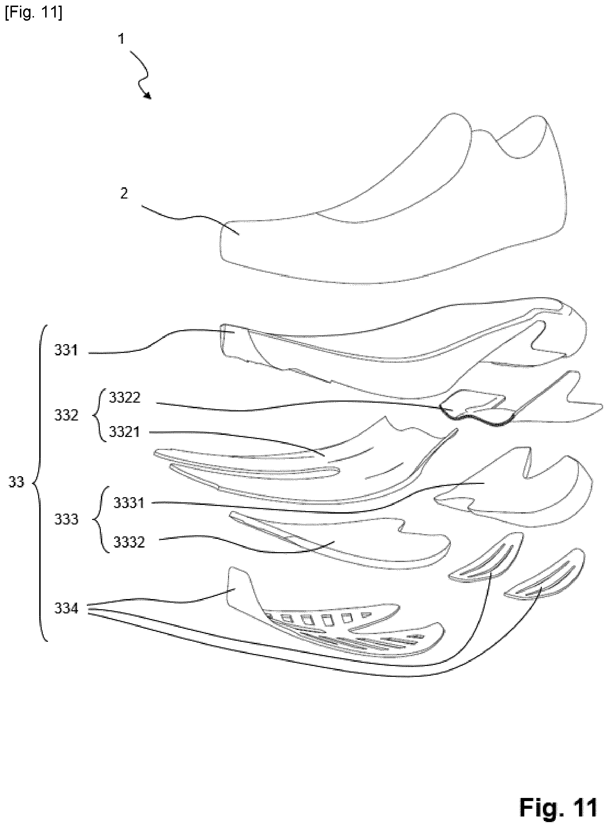

[Fig. 11] La figure 11 est une vue éclatée d'une chaussure selon un deuxième mode de réalisation.
[Fig. 12] La figure 12 est une vue éclatée d'une chaussure selon un troisième mode de réalisation.
[Fig. 13] La figure 13 est une vue de côté, côté médial, de la chaussure de la figure 12.
[Fig. 14] La figure 14 est une vue de dessous de la chaussure de la figure 12.

Dans la suite de la description, il sera fait usage de termes tels que « vertical », « supérieur », « inférieur », « haut », « bas », « transversal », « latéral », « médial », « droite », « gauche », « horizontal », « antérieur », « postérieur », « devant », « derrière », « avant », « arrière ». Ces termes doivent être interprétés de façon relative en relation avec la position que la chaussure occupe sur le pied d'un utilisateur en posture normale, et la direction d'avancement normale d'un utilisateur. On considère une posture normale, une configuration pour laquelle la semelle est posée à plat sur un sol horizontal.

Les termes « latéral » et « médial », de manière conventionnelle, s'entendent comme tournés respectivement vers l'extérieur et vers l'intérieur. Ainsi, le côté médial d'un pied ou d'une chaussure est tourné vers le côté médial de l'autre pied ou de l'autre chaussure de l'utilisateur.

Le terme « longitudinal » fait référence à une direction talon-orteils correspondant à l'axe X alors que le terme « transversal », fait référence à une direction médiale-latérale (pour un pied gauche) correspondant à l'axe Y et donc sensiblement perpendiculaire à la direction longitudinale. La direction verticale ou bas/haut correspond à l'axe Z. Un plan frontal ou coronal YZ est un plan perpendiculaire à un axe X. Un plan sagittal XZ est un plan perpendiculaire à un axe Y Un plan transverse XY est un plan perpendiculaire à un axe Z

Dans la description, une « chaussure » est définie par un « semelage » et une « tige ». Le « semelage » est la partie inférieure de la chaussure comprise entre le pied et le sol. C'est le « dessous » de la chaussure. Le semelage est positionné en vis-à-vis de la plante du pied. La « tige » est la partie supérieure de la chaussure enveloppant le pied et éventuellement une partie de la cheville, à l'exception du « dessous » du pied. C'est le « dessus » de la chaussure. La tige est solidarisée avec le bord périphérique du semelage. A noter que certains éléments de la chaussure peuvent former à la fois une partie du semelage et une partie de la tige.

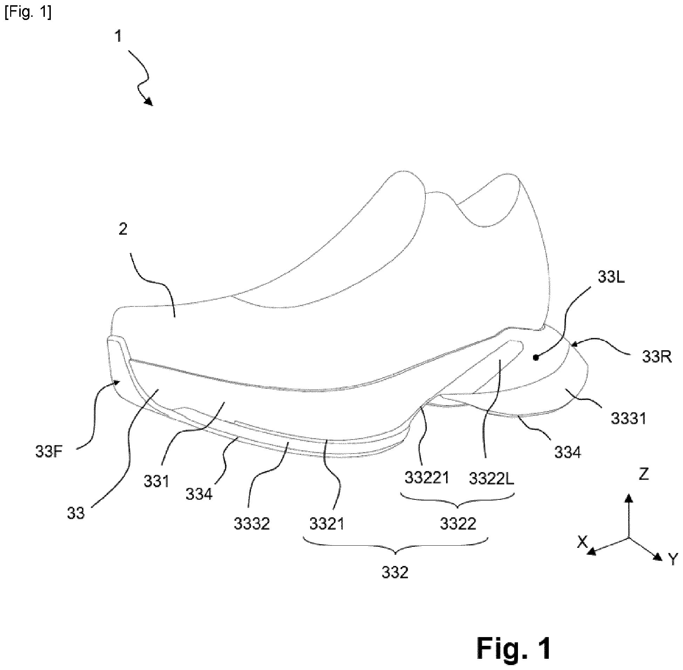

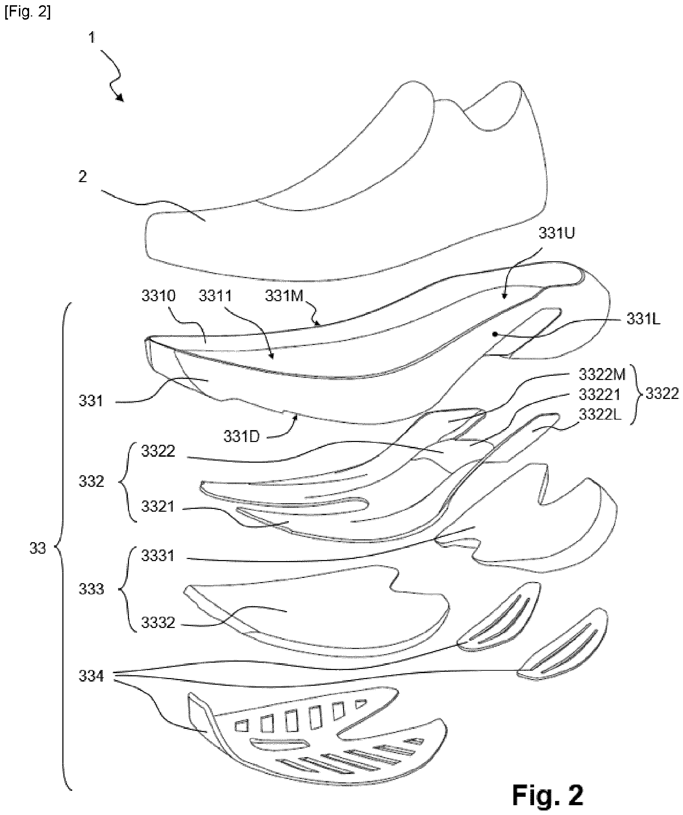

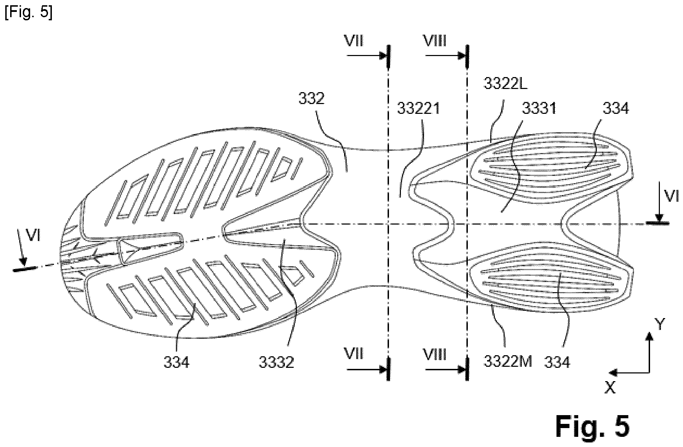

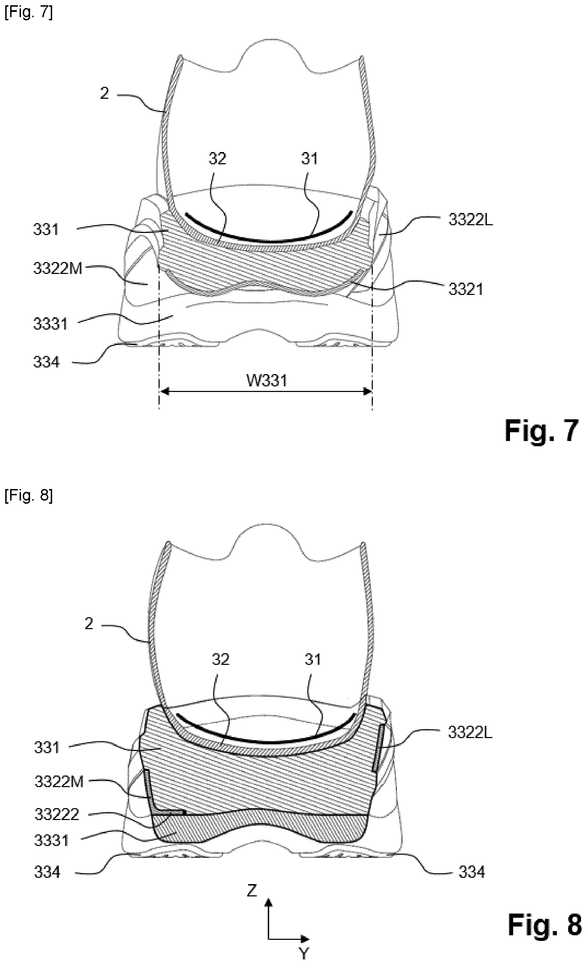

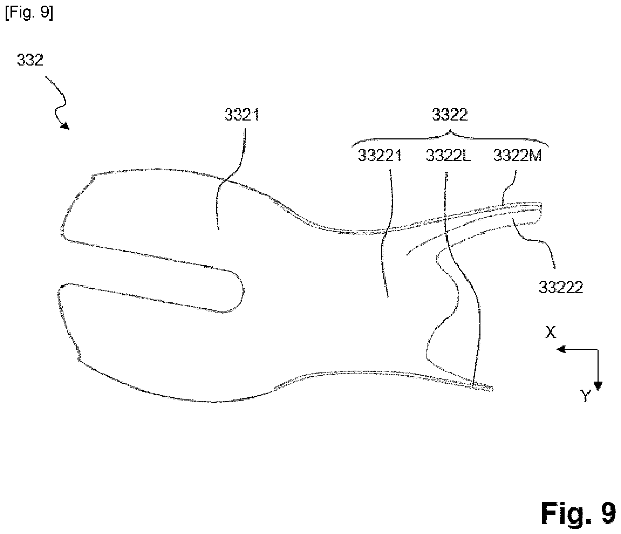

Les figures 1 à 10 illustrent la construction d'un semelage externe selon un premier mode de réalisation de l'invention dans une chaussure de sport 1. La chaussure de sport 1 pour pied gauche représentée est une chaussure de course à pied, mais pourrait être un tout autre type de chaussure de sport. Cette chaussure 1 est représentée en perspective, vue de dessus dans la figure 1. Elle comporte une tige 2 surmontant un semelage 3. La tige 2 ne sera pas décrite de façon détaillée dans la suite. Ce peut être n'importe quelle construction de tige.

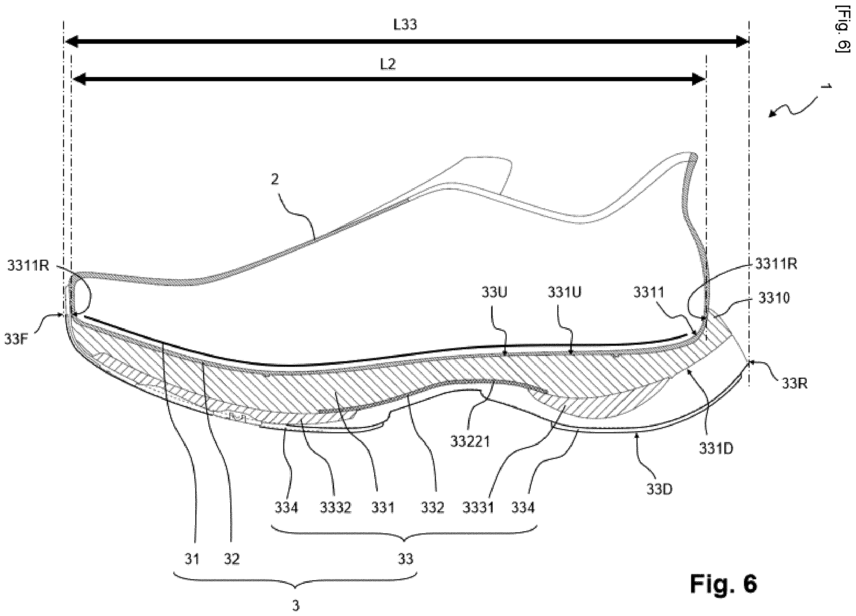

Le semelage 3 comprend une superposition de couches entre le sol et le dessous du pied, comme illustrée à la figure 6. En partant du pied, la première couche est une première de propreté 31. Elle est généralement montée amovible à l'intérieur de la chaussure. La couche suivante, située dessous la première de propreté 31, est une première de montage 32. Cette deuxième couche 32 est généralement fixée aux bords périphériques inférieurs de la tige 2. Enfin, on retrouve un semelage externe 33, sous la première de montage 32. Ce semelage externe 33 est généralement fixé sur la première de montage 32 de toute façon connue en soi, comme par exemple, par collage. Ce semelage externe 33 est destiné à venir au contact du sol. La première de propreté 31 est optionnelle. La première de montage 32 est également optionnelle. Dans ce dernier cas, la tige peut être directement fixée sur le bord périphérique du semelage externe 33.

L'invention porte sur une construction spécifique du semelage externe 33.

Le semelage externe 33 s'étend en longueur depuis une extrémité arrière 33R jusqu'à une extrémité avant 33F, définissant ainsi une longueur de semelle L33, en largeur entre un côté latéral 33L et un côté médial 33M, et en hauteur depuis une face inférieure 33D jusqu'à une face supérieure 33U.

Le semelage externe 33 comprend une couche d'amortissement supérieure 331 s'étendant sur sensiblement toute la longueur du semelage externe L33, c'est-à-dire, au moins 90% de la longueur totale du semelage externe. La couche d'amortissement supérieure 331 est délimitée, en hauteur, par une surface supérieure 331U et par une surface inférieure 331D, et en largeur, par une surface latérale 331L et par une surface médiale 331M. Le pourtour de la surface supérieure 331U comprend un rebord 3310 formant une démarcation pour la tige 2 de la chaussure 1. La face interne de ce rebord 3310 et la partie de la surface supérieure 331U entourée par ce rebord forment une surface interface 3311 avec la tige 2. Ainsi, la surface interface 3311 est délimitée par la face interne de ce rebord 3310 et s'étend en longueur entre une extrémité antérieure 3311F et une extrémité postérieure 3311R Cette longueur correspond sensiblement à la longueur de la tige L2. La surface interface 331U est destinée à recevoir l'optionnelle première de montage 32.

La couche d'amortissement supérieure 331 est constituée d'un matériau composé de mousse alvéolaire, par exemple, à base d'un des matériaux suivants :
- Matière thermodurcissable : l'Ethylène-Acétate de Vinyle (EVA), Polyuréthane (PU)
- Matière thermoplastique élastomère : Polyuréthane ThermoPlastique (TPU), Thermopastique Elastomère base polyesther (TPEE), Polyether bloc amide (PEBA), Polyoléfine Thermoplastique (TPO/POE)
- Un mix des matériaux précédents.

La couche d'amortissement supérieure 331 peut être obtenue par injection, compression ou par procédé additive tel que l'impression 3D. L'injection peut également être réalisée avec des matériaux à l'état supercritique. Le procédé de réalisation peut comprendre également une étape d'expansion dans une étuve sous conditions de température et pression contrôlées.

Le semelage externe 33 comprend également une lame rigide 3321 positionnée sous la partie antérieure de la surface inférieure 331D de couche d'amortissement supérieure 331. La lame rigide va rigidifier la semelle au niveau des métatarses, limitant alors la flexion de ces derniers et donc la perte d'énergie générée lors de la flexion de l'articulation métatarso-phalangienne. Par ailleurs, conjuguée à une semelle ayant une importante relève à l'avant-pied (*rocker*) et plus précisément un point de pivot en amont de la tête du premier métatarse, la plaque rigide permet d'exacerber l'effet de bascule au moment de l'application de force par le coureur à l'avant-pied facilitant ainsi la propulsion et plus généralement le mouvement vers l'avant. Il est en revanche primordial de noter qu'une plaque rigide n'a un effet positif sur la performance si et seulement si elle est insérée dans une semelle courbée à l'avant. C'est donc cette combinaison géométrie et raideur qui améliore d'améliorer le déroulé du pied au sol ainsi que la propulsion.

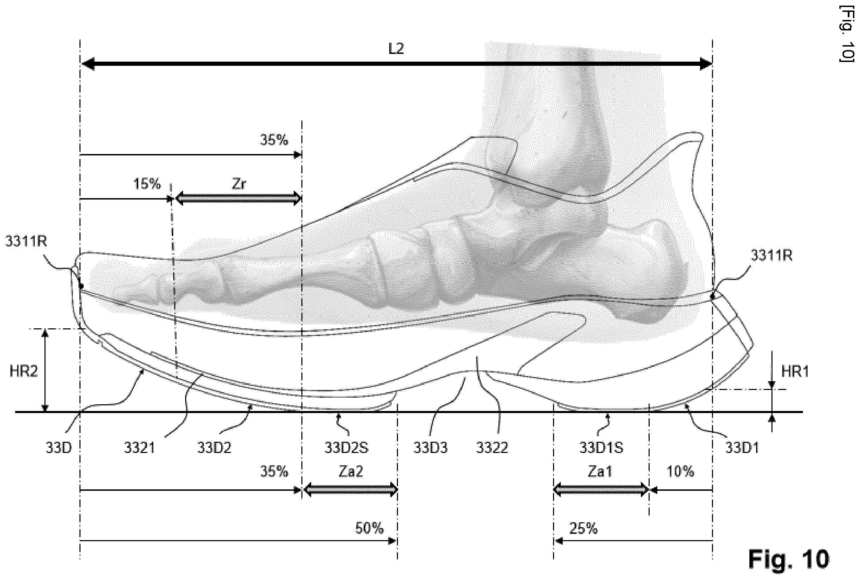

Pour obtenir ce bénéfice, la lame rigide est disposée au moins en partie dans une moitié antérieure du semelage externe. Selon un mode de réalisation, elle couvre au moins 50% de la surface projetée au sol de la moitié antérieure du semelage externe 33. Avantageusement, la lame rigide 3321 est positionnée à minima en vis-à-vis du point de pivot en amont de la tête du premier métatarse. Cela correspond à un positionnement à minima de la lame rigide sur toute une zone rigide Zr localisée entre 15% et 35% de la longueur de tige L2, depuis l'extrémité antérieure 3311F de la surface interface 3311. La figure 10 illustre ce recouvrement à minima.

La lame rigide 3321 peut prendre différentes formes. Pour couvrir la partie antérieure souhaitée de la surface inférieure 331D de couche d'amortissement supérieure 331, la plaque peut être une plaque pleine, couvrant entièrement, en largeur et en longueur, ladite partie ciblée, ou une plaque comprenant des évidements ou découpes, couvrant alors partiellement ladite partie ciblée. Par exemple, elle peut comprendre une bande transversale d'où partent plusieurs extensions longitudinales. Dans l'exemple illustré, la lame comprend une fente médiane antérieure divisant la partie avant de la plaque en deux extensions longitudinales, une médiale et l'autre latérale. Elle peut également comprendre des renforts localement. Selon un plan sagittal, elle peut être plane ou concave avec un ou des rayons de courbure dont le centre est positionné du côté de la surface interface supérieure 331. C'est d'ailleurs préférable pour faciliter l'effet de bascule du pied, cela améliore l'effet « rocker ». Selon un plan frontal, elle peut être plane ou concave avec un ou des rayons de courbure dont le centre est positionné du côté de la surface interface supérieure 331. Avantageusement, la lame rigide comprend au moins une zone présentant une continuité de matière selon une direction longitudinale pour assurer la raideur longitudinale recherchée.

La lame rigide 3321 est constituée d'un matériau présentant un module d'élasticité, ou module de Young, supérieur à 750 MPa. Avantageusement, pour ne pas pénaliser le confort et ne pas trop contraindre le pied, le module d'élasticité est inférieur à 70 GPa. Un tel matériau peut être polymère thermoplastique, par exemple, un PolyAmide (PA), un Polyuréthane ThermoPlastique (TPU) ou un matériau composite composé d'une matrice thermoplastique/thermodurcissable (PA, TPU, epoxy...) combiné avec des fibres (verre, carbone, lin...). Selon un mode de réalisation, ce matériau présente une dureté supérieure à 40 shore D, préférentiellement supérieure à 50 shore D

La lame rigide peut également être constituée de plusieurs matériaux solidarisés entre eux. Par exemple, la lame peut être obtenue par bi-injection ou une combinaison de couches collées entre elles.

La lame rigide 3321 peut être obtenue par injection, compression ou par procédé additive tel que l'impression 3D.

Avantageusement, la lame rigide 3321 a une épaisseur moyenne comprise entre 0,7 et 2 millimètres.

Le semelage externe 33 comprend aussi une couche d'amortissement inférieure avant 3332 positionnée sous la lame rigide 3321. Ainsi, la lame rigide 3321 est intercalée entre la couche d'amortissement supérieure 331 et une couche d'amortissement inférieure avant 3332.

La couche d'amortissement inférieur avant 3332 est constituée d'un matériau composé de mousse alvéolaire par exemple, d'un des matériaux suivants :
- Matière thermodurcissable : l'Ethylène-Acétate de Vinyle (EVA), Polyuréthane (PU)
- Matière thermoplastique élastomère : Polyuréthane ThermoPlastique (TPU), Thermopastique Elastomère base polyesther (TPEE), Polyether bloc amide (PEBA), Polyoléfine Thermoplastique (TPO/POE)
- Un mix des matériaux précédents.

La couche d'amortissement inférieur avant 3332 peut être obtenue par injection, compression ou par procédé additive tel que l'impression 3D. L'injection peut également être réalisée avec des matériaux à l'état supercritique. Le procédé de réalisation peut comprendre également une étape d'expansion dans une étuve sous conditions de température et pression contrôlées.

Comme nous l'avons vu précédemment, pour obtenir un bon déroulé, la surface inférieure de la couche d'amortissement inférieur avant 3332 est avantageusement concave et dimensionnée pour obtenir une importante relève à l'avant-pied (*rocker*) et plus précisément un point de pivot derrière la tête du premier métatarse (en direction du talon).

Selon l'invention, le semelage externe 33 comprend également un support rigide 3322.

Ce support rigide 3322 comporte un pont inférieur 33221 couvrant une partie de la surface inférieure 331D de la couche d'amortissement supérieure 331. Le pont inférieur 33221 s'étend sensiblement (au moins sur 90%) sur toute la largeur W331 de cette couche d'amortissement supérieure 331 au niveau d'au moins un segment transversal d'une zone centrale Zc localisée entre 30% et 50% de la longueur de tige L2, depuis l'extrémité postérieure 3311R de la surface interface 3311. Ainsi, le pont inférieur 33221 peut couvrir la largueur W331 de cette couche d'amortissement supérieure 331 sur toute la zone centrale Zc ou alternativement, localement, sur une portion de longueur de semelle. Dans ce dernier cas, le segment transversal de recouvrement s'étend sur une longueur, selon la direction longitudinale X du semelage, d'au moins vingt millimètres afin d'assurer une certaine tenue, rigidité, du support rigide et un bon maintien des ailes latérale et médiale. Ce segment transversal pourrait comprendre des évidements.

Ce support rigide 3322 comporte également une aile latérale 3322L couvrant une partie de la surface latérale 331L de la couche d'amortissement supérieure 331, la partie de recouvrement couvrant au moins une bande de largeur HL d'au moins dix millimètres, cette bande s'étendant en longueur, vers l'arrière, depuis le pont inférieur 33221 du support rigide 3322 jusqu'au moins un plan frontal PL du semelage externe distant de 20% de la longueur de tige L2, depuis l'extrémité postérieure 3311R de la surface interface 3311. Ce support rigide 3322 comporte aussi une aile médiale 3322M couvrant une partie de la surface médiale 331M de la couche d'amortissement supérieure 331, la partie de recouvrement couvrant au moins une bande de largeur HL d'au moins dix millimètres, cette bande s'étendant en longueur, vers l'arrière, depuis le pont inférieur 33221 du support rigide 3322 jusqu'au moins un plan frontal PM du semelage externe distant de 20% de la longueur de tige L2, depuis l'extrémité postérieure 3311R de la surface interface 3311.

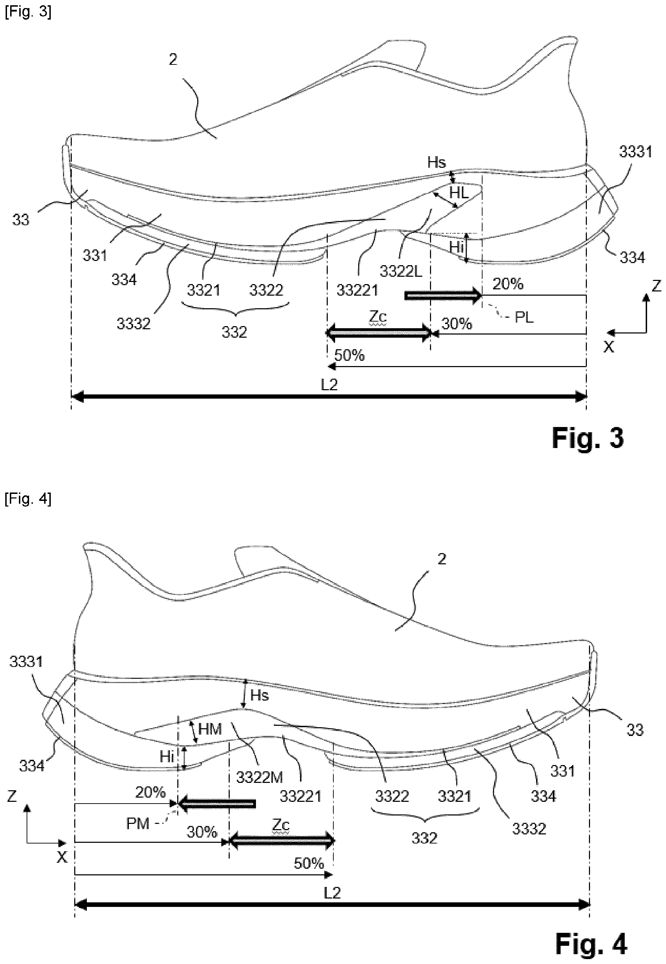

Au sens de l'invention, la bande s'étend en longueur, vers l'arrière, jusqu'au moins un plan frontal signifie que la bande comprend au moins une extrémité ou un bord au niveau de ce plan. Il n'est pas nécessaire que la largeur HL, HM de la bande, mesurée verticalement (selon une direction Z), soit d'au moins dix millimètres au niveau de ce plan frontal. La figure 3 illustre cette interprétation.

Le pont inférieur 33221, l'aile latérale 3322L et l'aile médiale 3322M peuvent comprendre des évidements ou découpes. La partie de recouvrement minima de l'aile latérale 3322L et/ou l'aile médiale 3322M peut former une bande inclinée, elle n'est donc pas nécessairement rectiligne, ni horizontale. Par ailleurs, les ailes 3322L, 3322M n'ont pas nécessairement le même dimensionnement et/ou agencement (dissymétrie).

Selon un mode de réalisation, l'aile latérale 3322L et/ou l'aile médiale 3322M s'étend en longueur davantage vers l'arrière, depuis le pont inférieur 33221 du support rigide 3322 jusqu'au moins un plan frontal du semelage externe distant de 10% de la longueur de tige L2, depuis l'extrémité postérieure 3311R de la surface interface 3311. Cela permet de mieux contenir la déformation latérale de la couche d'amortissement supérieure 331 et donc d'améliorer la résilience de la semelle externe, notamment en début de phase de réception.

Selon un mode de réalisation, l'aile latérale 3322L et l'aile médiale 3322M ne couvrent pas toute la hauteur de l'ensemble des couches d'amortissement du semelage externe au niveau du talon.

Par exemple, les ailes sont dimensionnées de sorte que le bord supérieur de ces ailes est toujours distant d'une distance Hs d'au moins cinq millimètres du bord supérieur périphérique du semelage externe, autrement dit, du bord de la face supérieure 33U du semelage externe 33.

Selon un autre exemple, les ailes sont dimensionnées de sorte que le bord inférieur de ces ailes est toujours distant d'une distance Hi d'au moins six millimètres du bord inférieur périphérique du semelage externe, autrement dit, du bord de la face inférieure 33D du semelage externe 33.

Selon un mode de réalisation, ces ailes sont dimensionnées de sortes que le bord supérieur de ces ailes est toujours distant d'une distance Hs d'au moins cinq millimètres du bord supérieur périphérique du semelage externe et que le bord inférieur de ces ailes est toujours distant d'une distance Hi d'au moins six millimètres du bord inférieur périphérique du semelage externe.

Ces différentes variantes permettent de conserver de bonne propriété d'absorption des chocs vibratoires du fait que les couches d'amortissement du semelage externe peuvent s'écraser librement dans ces zones non recouvertes par les ailes.

Selon un mode de réalisation, au moins une des ailes latérale ou médiale comprend un rebord inférieur 33222 s'étendant sensiblement horizontalement, vers le centre du semelage, depuis le bord inférieur de l'aile. Le rebord 33222 peut s'étendre sur toute la longueur de l'aile ou partiellement. Le rebord inférieur 33222 couvre une partie de la surface inférieure 331D de la couche d'amortissement supérieure 331. Avantageusement, ce recouvrement s'étend, vers l'intérieur, sur une distance d'au moins cinq millimètres depuis le bord périphérique inférieur de la surface inférieure 331D. Ce rebord inférieur 33222 est destiné à être solidarisé à la couche d'amortissement supérieure, par exemple, par collage. Ce rebord permet d'améliorer le maintien en position de l'aile en réduisant son écartement transversal, notamment lors des foulées au cours desquelles le semelage est écrasé entrainant une sollicitation transversale de l'aile du fait de la déformation de la couche d'amortissement supérieure. On réduit également le risque de détérioration des ailes en fatigue résultant d'une sollicitation répétitive.

Des essais ont permis de montrer que pour obtenir un bon comportement de la chaussure et principalement un bon maintien, il importe surtout d'avoir un support rigide 3322 avec une aile latérale 3322L afin de limiter l'écrasement de la couche amortissante lors de la phase « d'attaque » du pied pendant laquelle le couche d'amortissement tend à se déformer vers l'extérieur. L'aile latérale tend alors à contenir cette déformation pour une meilleure stabilité et pour favoriser la restitution d'énergie.

Ainsi, une solution alternative à celles décrites précédemment est d'avoir un support rigide 3322 sans aile médiale 3322M mais uniquement munie d'une aile latérale 3322L. L'absence d'aile médiale permet de moins solliciter la couche d'amortissement lors des impacts talons et donc de réduire le risque d'endommager localement la couche d'amortissement.

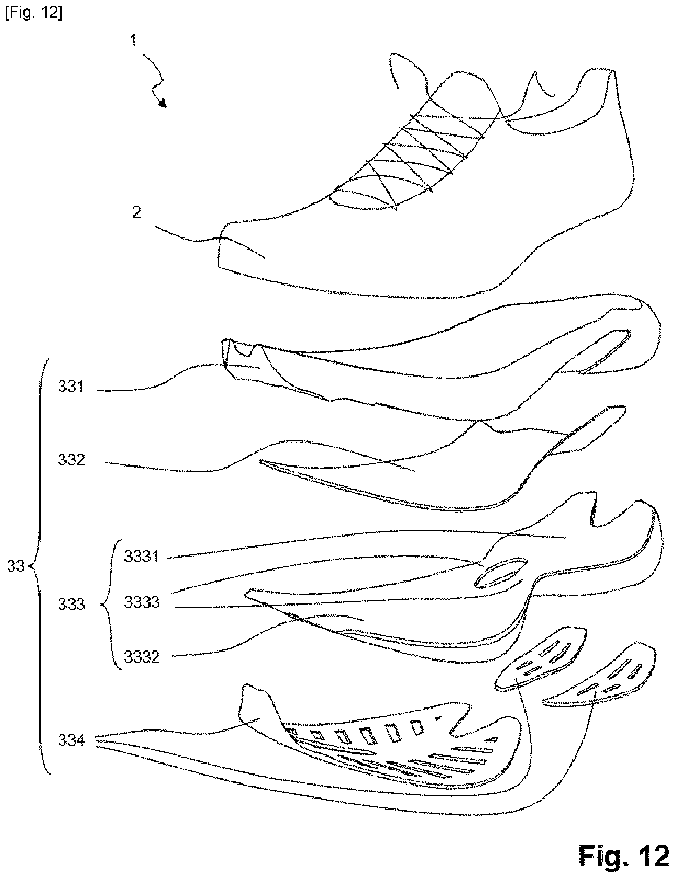

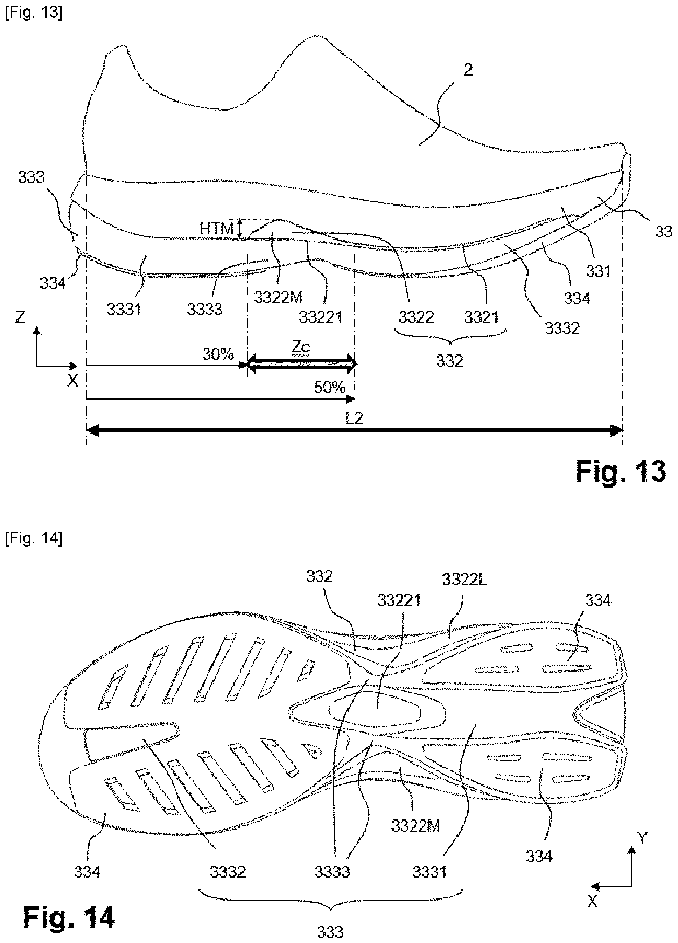

Selon un autre mode de réalisation illustré aux figures 12 à 14, la construction est un compromis entre la solution alternative précédente et les autres modes de réalisation. Dans cet exemple, le support rigide 3322 comprend une aile latérale 3322L et une aile médiale 3322M. L'aile latérale 3322L est analogue à celle décrite dans les modes de réalisation précédent et notamment celle illustrée à la figure 3. Cependant, ici, l'aile médiale 3322M est plus compacte. Elle est localisée au niveau de la partie médiale de la voûte plantaire et ne s'étend pas vers l'arrière. Cette conception apporte un maintien de la voute qui améliore le confort et la stabilité lors du déroulé du pied. Ainsi, le support rigide 3322 comporte une aile médiale 3322M couvrant au moins une partie de la surface médiale 331M de la couche d'amortissement supérieure 331, localisée entre 30% et 50% de de la longueur de tige L2, depuis l'extrémité postérieure 3311R de la surface interface 3311, la partie de recouvrement remontant le long de la surface médiale 331M de la couche d'amortissement supérieure 331, au moins localement, sur une hauteur HTM d'au moins dix millimètres depuis le pont inférieur 33221.

Le support rigide 3322 est constitué d'un matériau présentant un module d'élasticité, ou module de Young, supérieur à 100 MPa. Avantageusement, pour ne pas pénaliser la propriété d'absorption des chocs vibratoires de la couche d'amortissement de la couche d'amortissement supérieure, le module d'élasticité est inférieur à 2 000 MPa. Un tel matériau peut être polymère thermoplastique, par exemple, un PolyAmide (PA), un Polyuréthane ThermoPlastique (TPU) ou un matériau composite composé d'une matrice thermoplastique/thermodurcissable (PA, TPU, epoxy...) combiné avec des fibres (verre, carbone, lin...). Selon un mode de réalisation, ce matériau présente une dureté supérieure à 40 shore D, préférentiellement supérieure à 50 shore D.

Le support rigide 3322 peut être obtenu par injection, compression ou par procédé additive tel que l'impression 3D.

Le support rigide peut également être constitué de plusieurs matériaux solidarisés entre eux. Par exemple, le support rigide peut être obtenu par bi-injection.

Avantageusement, le support rigide 3322 a une épaisseur comprise entre 0,7 et 2 millimètres.

Avantageusement, la rigidité de lame rigide 3321 est supérieure à la rigidité des ailes 3322L, 3322M du support rigide 3322. Autrement dit, pour un même effort exercé perpendiculairement à ces pièces, les ailes fléchissent davantage que la lame. Cette rigidité peut être obtenu par le dimensionnement (épaisseur, largeur, longueur...) et/ou le choix du matériau. Ainsi, le module d'élasticité du matériau constitutif de la lame rigide peut avantageusement être supérieur au module d'élasticité du matériau constitutif des ailes du support rigide, au moins cinq fois plus élevé. En effet, il n'est pas nécessaire d'avoir des ailes qui limitent fortement l'expansion latérale de la couche d'amortissement. A l'inverse, la lame rigide doit rigidifier la semelle au niveau des métatarses, afin de limiter la flexion de ces derniers. Il faut donc que la rigidité de la lame rigide soit suffisante pour réduire sa déformation. De plus, cela permet d'utiliser un matériau plus léger pour le support rigide ce qui va réduire le poids de la chaussure et donc apporter du confort.

Selon un mode de réalisation, la lame rigide et le support rigide sont deux pièces distinctes, distantes l'une de l'autre. Alternativement, ces deux pièces distinctes peuvent être solidarisées l'une à l'autre par tout moyen approprié, par exemple, par collage, soudage. Cette variante assure une continuité dans le déroulé, facilite l'assemblage et améliore la résilience du semelage. Selon un autre mode de réalisation la lame rigide et le support rigide forme une seule et même pièce unitaire, un châssis rigide 332. Cette variante facilite l'assemblage et réduit le nombre de pièce constitutive. Là aussi, cela assure une continuité dans le déroulé et améliore la résilience du semelage. Selon une variante, ce châssis rigide peut être obtenu par bi-injection afin d'utiliser des matériaux différents pour la partie lame rigide et la partie support rigide. Cela permet d'obtenir la différence de rigidité souhaitée comme on l'a vu précédemment. Selon une variante, la face inférieure du châssis rigide 332 comprend un creux au niveau de la voûte plantaire. Ainsi, le châssis 332 forme une bosse orientée en direction du pied. Ce creux permet d'augmenter la raideur en flexion et torsion avec une épaisseur réduite, et ainsi d'éviter les déformations de la semelle lors de la phase de transition pouvant potentiellement faire perdre de l'énergie. Cela permet aussi de réduire le poids du châssis 332.

Selon un mode de réalisation, le semelage externe 33 comprend, au niveau du talon, une couche d'amortissement inférieure arrière 3331 positionnée sous la couche d'amortissement supérieure 331. Selon certains modes de réalisation, une partie 33222, 33223 du support rigide 3322 peut s'intercaler entre la couche d'amortissement supérieure 331 et la couche d'amortissement inférieure arrière 3331. Par exemple, cette partie intercalée peut être une partie du rebord 33222 d'une aile ou des deux ailes. Selon un autre exemple, cette partie intercalée peut être une extension 33223 du support rigide 3322. L'extension s'étendant vers l'arrière depuis le pont inférieur 33221 au niveau de la médiane du semelage. Grâce à cette extension prise en sandwich entre deux couches amortissement, le support rigide 3322 est mieux maintenu en place dans le semelage.

La couche d'amortissement inférieur arrière 3331 est constituée d'un matériau composé de mousse alvéolaire par exemple, d'un des matériaux suivants :
- Matière thermodurcissable : l'Ethylène-Acétate de Vinyle (EVA), Polyuréthane (PU)
- Matière thermoplastique élastomère : Polyuréthane ThermoPlastique (TPU), Thermopastique Elastomère base polyesther (TPEE), Polyether bloc amide (PEBA), Polyoléfine Thermoplastique (TPO/POE)
- Un mix des matériaux précédents.

La couche d'amortissement inférieur arrière 3331 peut être obtenue par injection, compression ou par procédé additive tel que l'impression 3D. L'injection peut également être réalisée avec des matériaux à l'état supercritique. Le procédé de réalisation peut comprendre également une étape d'expansion dans une étuve sous conditions de température et pression contrôlées.

La couche d'amortissement inférieur 333 du semelage externe 33 est ainsi composé de la couche d'amortissement inférieur avant 3332 et de la couche d'amortissement arrière 3331.

Selon un mode de réalisation, illustré aux figures 12 à 14, la couche d'amortissement inférieur avant 3332 et la couche d'amortissement arrière 3331 sont reliées pour former une seule et même pièce unitaire monobloc constituant la couche d'amortissement inférieur 333. Cela permet de facilite le processus d'assemblage et réduit le nombre de pièce constitutive. Selon un mode de réalisation, cette couche d'amortissement inférieur commune peut comprendre des évidements, fenêtres ou découpes localement. Ainsi, le semelage externe 33 peut ne pas comprendre de couche d'amortissement inférieur localement (dans son épaisseur), par exemple, dans une zone centrale au niveau de la voûte plantaire. En reliant la couche d'amortissement inférieur avant 3332 et la couche d'amortissement arrière 3331 par des ponts 3333, cela permet de protéger le support rigide 3322 notamment des chocs et du risque de fissures et/ou casse lorsqu'on déforme anormalement la semelle par flexion. Les ponts permettent de limiter ces flexions anormales.

Selon un mode de réalisation, la couche d'amortissement supérieure 331 s'étend jusqu'au sol dans sa partie postérieure, au niveau du talon. Dans ce cas, il n'y a pas de couche d'amortissement arrière 3331.

Selon un mode de réalisation, la face inférieure 33D du semelage externe 33 est relevée à l'avant et/ou à l'arrière afin de faciliter le déroulé du pied. On parle alors de semelle « rocker ».

Selon un mode de réalisation, la face inférieure 33D du semelage externe 33 est relevée à l'avant et à l'arrière et forme une arche 33D3 au niveau de la voûte plantaire. On parle alors de semelle « double rocker ». Cette construction facilite le déroulé mais également le basculement de la phase de réception vers la phase de poussée, rendant la foulée plus dynamique. Un tel exemple est illustré dans la figure 10.

Dans cet exemple, la face inférieure 33D du semelage externe 33 présente une première partie convexe arrière 33D1 au niveau du talon définissant une zone de contact arrière 33D1S avec le sol lorsque la semelle est posée à plat sur le sol. Cette zone de contact arrière 33D1S se présente sous la forme d'une bande de contact transversale de largeur inférieure à vingt millimètres, selon la direction longitudinal X du semelage externe. Le centre de la zone de contact arrière 33D1S est positionné dans une zone d'appui arrière Za1 localisée entre 10% et 25% de la longueur de tige L2, depuis l'extrémité postérieure 3311R de la surface interface supérieure 3311. Le positionnement et le dimensionnement de bande de contact dans cette zone de contact arrière 33D1S permet d'écourter la phase d'impact et de réduire les forces antéro-postérieures. Par ailleurs, la face inférieure 33D du semelage externe 33 présente une deuxième partie convexe avant 33D2 au niveau du l'avant-pied définissant une zone de contact avant 33D2S avec le sol lorsque la semelle est posée à plat sur le sol. Cette zone de contact avant 33D2S se présente sous la forme d'une bande de contact transversale de largeur inférieure à vingt millimètres, selon la direction longitudinal X du semelage externe. Le centre de la zone de contact avant 33D2S est positionné dans une zone d'appui avant Za2 localisée entre 35% et 50% de la longueur de tige L2, depuis l'extrémité antérieure 3311F de la surface interface supérieure 3311. Le positionnement et le dimensionnement de bande de contact dans cette zone de contact avant 33D2 permet d'accélérer la transition vers l'avant de la chaussure.

En dehors de ces deux zones de contact 33D1 et 33D2, la face inférieure 33D du semelage externe 33 est éloignée du sol. Dans la partie antérieure à la zone de contact avant 33D2S, le semelage externe est convexe de sorte à obtenir un bon relevé de l'avant du semelage externe. Ainsi, au droit de l'extrémité antérieure 3311F de la surface interface 3311, la face inférieure 33D du semelage externe 33 est écartée d'une distance HR2 supérieure à trente millimètres du sol. Dans la partie postérieure à la zone de contact arrière 33D1S, le semelage externe est convexe de sorte à obtenir un bon relevé de l'arrière du semelage externe. Ainsi, au droit de l'extrémité postérieure 3311R de la surface interface 3311, la face inférieure 33D du semelage externe 33 est écartée d'une distance HR1 supérieure à dix millimètres du sol. Dans la partie centrale du semelage, entre les deux zones de contact 33D1S et 33D2S, le semelage externe est concave, formant ainsi une arche.

L'emplacement spécifique des deux zones de contact 33D1S et 33D2S permet d'accélérer fortement le déroulé du pied au sol lors des étapes de la phase d'appui de la chaussure, le contact initial, le demi-appui et la propulsion. Cette construction va permettre d'accélérer/faciliter le basculement vers l'avant de la chaussure et donc la propulsion. Ainsi, l'utilisateur aura moins de puissance à fournir. La géométrie du semelage en dehors de ces zones de contact, telle que définie précédemment, accentue ce bénéfice.

Le semelage externe 33 peut comprendre une couche d'usure 334 destiné à venir en contact avec le sol. La couche d'usure définit ainsi une partie de la face inférieure 33D du semelage externe 33. La couche d'usure 334 n'est pas nécessairement continue pour recouvrir intégralement la face inférieure d'une couche d'amortissement.

L'assemblage entre les composants 331, 332 (3321, 3322), 3331, 3332, 334 du semelage externe peut être réalisé par tout moyen approprié, par exemple, par collage, soudage.

L'invention n'est pas limitée aux modes de réalisation précédemment décrits. Il est également possible de combiner ces modes de réalisation. L'invention s'étend à tous les modes de réalisation couverts par les revendications annexées.

### Références

- 1.: Chaussure
- 2.: Tige
- 3.: Semelage
31. Première de propreté
32. Première de montage
33. Semelage externe
331. Couche d'amortissement supérieure
3310. Rebord
3311. Surface interface
3311F. Extrémité antérieure
3311R. Extrémité postérieure
L2. Longueur de tige
331U. Surface supérieure
331D. Surface inférieure
331L. Surface latérale
331M. Surface médiale
332. Châssis rigide
3321. Lame rigide
3322. Support rigide
3322L. Aile latérale
3322M. Aile médiale
33221. Pont inférieur
33222. Rebord
33223. Extension
333. Couche d'amortissement inférieure
3331. Couche d'amortissement inférieure arrière
3332. Couche d'amortissement inférieure avant
3333. Ponts
334. Couche d'usure

## Revendications

1. Semelage externe (33) d'une chaussure (1) comportant une couche d'amortissement supérieure (331) comprenant une surface interface (3311) avec une tige (2) de la chaussure, la surface interface (3311) s'étendant sur une longueur de tige (L2), entre une extrémité antérieure (3311F) et une extrémité postérieure (3311R), le semelage externe comprenant une lame rigide (3321), présentant un module d'élasticité supérieur à 750 MPa, intercalée entre la couche d'amortissement supérieure (331) et une couche d'amortissement inférieure (333, 3332), la lame rigide étant disposée au moins en partie dans une moitié antérieure du semelage externe,
**caractérisé en ce**
**qu'**il comprend un support rigide (3322), présentant un module d'élasticité supérieur à 100 MPa, comportant
• un pont inférieur (33221) couvrant une partie de la surface inférieure (331D) de la couche d'amortissement supérieure (331), le pont inférieur s'étendant sensiblement sur toute la largeur (W331) de cette couche d'amortissement supérieure au niveau d'au moins un segment transversal d'une zone centrale (Zc) localisée entre 30% et 50% de de la longueur de tige (L2), depuis l'extrémité postérieure (3311R) de la surface interface (3311),
• une aile latérale (3322L) couvrant une partie de la surface latérale (331L) de la couche d'amortissement supérieure (331), la partie de recouvrement couvrant au moins une bande de largeur (HL) d'au moins dix millimètres, cette bande s'étendant en longueur, vers l'arrière, depuis le pont inférieur (33221) jusqu'au moins un plan frontal (PL) du semelage externe distant de 20% de la longueur de tige (L2) de l'extrémité postérieure (3311R) de la surface interface (3311).

2. Semelage externe (33) selon la revendication 1, **caractérisé en ce que** le support rigide (3322) comporte également une aile médiale (3322M) couvrant au moins une partie de la surface médiale (331M) de la couche d'amortissement supérieure (331), localisée entre 30% et 50% de de la longueur de tige (L2), depuis l'extrémité postérieure (3311R) de la surface interface (3311), la partie de recouvrement remontant le long de la surface médiale (331M) de la couche d'amortissement supérieure (331), au moins localement, sur une hauteur (HTM) d'au moins dix millimètres depuis le pont inférieur (33221).

3. Semelage externe (33) selon l'une des revendications précédentes, **caractérisé en ce que** le support rigide (3322) comporte également une aile médiale (3322M) couvrant une partie de la surface médiale (331M) de la couche d'amortissement supérieure (331), la partie de recouvrement couvrant au moins une bande de largeur (HM) d'au moins dix millimètres, cette bande s'étendant en longueur, vers l'arrière, depuis le pont inférieur (33221) jusqu'au moins un plan frontal (PM) du semelage externe distant de 20% de la longueur de tige (L2) de l'extrémité postérieure (3311R) de la surface interface (3311).

4. Semelage externe (33) selon l'une des revendications précédentes, **caractérisé en ce que** la lame rigide et le support rigide sont solidarisés l'une à l'autre.

5. Semelage externe (33) selon l'une des revendications 1 à 3, **caractérisé en ce que** la lame rigide et le support rigide forment une pièce unitaire.

6. Semelage externe (33) selon l'une des revendications précédentes, **caractérisé en ce que** la rigidité de lame rigide (3321) est au moins cinq fois supérieure à la rigidité d'une et/ou des deux ailes (3322L, 3322M) du support rigide (3322).

7. Semelage externe (33) selon l'une des revendications précédentes, **caractérisé en ce que** l'une et/ou les deux ailes (3322L, 3322M) du support rigide (3322) sont constituées d'un polymère thermoplastique parmi : un PolyAmide (PA), un Polyuréthane ThermoPlastique (TPU) ou un matériau composite composé d'une matrice thermoplastique/thermodurcissable (PA, TPU, epoxy...) combiné avec des fibres (verre, carbone, lin...).

8. Semelage externe (33) selon l'une des revendications précédentes, **caractérisé en ce que** le bord inférieur d'une et/ou des deux ailes (3322L, 3322M) du support rigide (3322) est distant du bord de la face inférieure (33D) du semelage externe (33), d'une distance (Hi) toujours supérieure à cinq millimètres.

9. Semelage externe (33) selon l'une des revendications précédentes, **caractérisé en ce que** le bord supérieur d'une et/ou des deux ailes (3322L, 3322M) du support rigide (3322) est distant du bord de la face supérieur (33U) du semelage externe (33), d'une distance (Hs) toujours supérieure à huit millimètres.

10. Semelage externe (33) selon l'une des revendications précédentes, **caractérisé en ce que** le support rigide (3322) comprend une partie (33222, 33223) intercalée entre la couche d'amortissement supérieure (331) et une couche d'amortissement inférieure arrière (3331, 333).

11. Semelage externe (33) selon l'une des revendications précédentes, **caractérisé en ce qu'**au moins une aile (3322L, 3322M) du support rigide (3322) comprend un rebord (33222) s'étendant sensiblement horizontalement, vers le centre du semelage, depuis le bord inférieur de l'aile (3322L, 3322M).

12. Semelage externe (33) selon l'une des revendications précédentes, **caractérisé en ce que** la face inférieure (33D) du semelage externe (33) présente
- une première partie convexe arrière (33D1) au niveau du talon définissant une zone de contact arrière (33D1S) avec le sol lorsque la semelle est posée à plat sur le sol. Cette zone de contact arrière (33D1S) se présente sous la forme d'une bande de contact transversale de largeur inférieure à vingt millimètres, selon la direction longitudinal X du semelage externe. Le centre de la zone de contact arrière (33D1S) est positionnée dans une zone d'appui arrière (Za1) localisée entre 10% et 25% de la longueur de tige (L2), depuis l'extrémité postérieure (3311R) de la surface interface supérieure (3311),
- une deuxième partie convexe avant (33D2) au niveau du l'avant-pied définissant une zone de contact avant (33D2S) avec le sol lorsque la semelle est posée à plat sur le sol. Cette zone de contact avant (33D2S) se présente sous la forme d'une bande de contact transversale de largeur inférieure à vingt millimètres, selon la direction longitudinal X du semelage externe. Le centre de la zone de contact avant (33D2S) est positionné dans une zone d'appui avant (Za2) localisée entre 35% et 50% de la longueur de tige (L2), depuis l'extrémité antérieure (3311F) de la surface interface supérieure (3311).

13. Semelage externe (33) selon l'une des revendications précédentes, **caractérisé en ce que** la couche d'amortissement inférieur (333) comporte une couche d'amortissement inférieur avant (3332) et une couche d'amortissement arrière (3331), reliées entre elles pour former une seule et même pièce unitaire monobloc.

14. Chaussure de sport (1) équipée d'un semelage externe (33) tel que défini dans l'une des revendications précédentes.

## Patentansprüche

1. Außenbesohlung (33) eines Schuhs (1), die eine obere Dämpfungsschicht (331) beinhaltet, die eine Schnittstellenfläche (3311) mit einem Schaft (2) des Schuhs umfasst, wobei sich die Schnittstellenfläche (3311) über eine Schaftlänge (L2) zwischen einem vorderen Ende (3311F) und einem hinteren Ende (3311R) erstreckt, wobei die Außenbesohlung eine steife Lage (3321) mit einem Elastizitätsmodul größer als 750 MPa umfasst, die zwischen die obere Dämpfungsschicht (331) und eine untere Dämpfungsschicht (333, 3332) eingefügt ist, wobei die steife Lage wenigstens teilweise in einer vorderen Hälfte der Außenbesohlung angeordnet ist,
**dadurch gekennzeichnet, dass** sie einen steifen Träger (3322) mit einem Elastizitätsmodul größer als 100 MPa umfasst, der Folgendes beinhaltet
• eine untere Brücke (33221), die einen Abschnitt der unteren Fläche (331D) der oberen Dämpfungsschicht (331) abdeckt, wobei sich die untere Brücke im Wesentlichen über die gesamte Breite (W331) dieser oberen Dämpfungsschicht im Bereich wenigstens eines Quersegments eines Mittelbereichs (Zc) erstreckt, der sich zwischen 30 % und 50 % der Schaftlänge (L2) ab dem hinteren Ende (3311R) der Schnittstellenfläche (3311) befindet,
• einen Seitenflügel (3322L), der einen Abschnitt der Seitenfläche (331L) der oberen Dämpfungsschicht (331) abdeckt, wobei der Abdeckungsabschnitt wenigstens einen Streifen mit einer Breite (HL) von wenigstens zehn Millimetern abdeckt, wobei sich dieser Streifen in der Länge ab der unteren Brücke (33221) nach hinten bis zu wenigstens einer Frontalebene (PL) der Außenbesohlung erstreckt, die um 20 % der Schaftlänge (L2) vom hinteren Ende (3311R) der Schnittstellenfläche (3311) beabstandet ist.

2. Außenbesohlung (33) nach Anspruch 1, **dadurch gekennzeichnet, dass** der steife Träger (3322) ebenfalls einen Medialflügel (3322M) beinhaltet, der wenigstens einen Abschnitt der Medialfläche (331M) der oberen Dämpfungsschicht (331) abdeckt, der sich zwischen 30 % und 50 % der Schaftlänge (L2) ab dem hinteren Ende (3311R) der Schnittstellenfläche (3311) befindet, wobei der Abdeckungsabschnitt die Medialfläche (331M) der oberen Dämpfungsschicht (331) entlang, wenigstens lokal auf einer Höhe (HTM) von wenigstens zehn Millimetern ab der unteren Brücke (33221) verläuft.

3. Außenbesohlung (33) nach einem der vorhergehenden Ansprüche, **dadurch gekennzeichnet, dass** der steife Träger (3322) ebenfalls einen Medialflügel (3322M) beinhaltet, der einen Abschnitt der Medialfläche (331M) der oberen Dämpfungsschicht (331) abdeckt, wobei der Abdeckungsabschnitt wenigstens einen Streifen mit einer Breite (HM) von wenigstens zehn Millimetern abdeckt, wobei sich dieser Streifen in der Länge ab der unteren Brücke (33221) nach hinten bis zu wenigstens einer Frontalebene (PM) der Außenbesohlung erstreckt, die um 20 % der Schaftlänge (L2) vom hinteren Ende (3311R) der Schnittstellenfläche (3311) beabstandet ist.

4. Außenbesohlung (33) nach einem der vorhergehenden Ansprüche, **dadurch gekennzeichnet, dass** die steife Lage und der steife Träger fest miteinander verbunden sind.

5. Außenbesohlung (33) nach einem der Ansprüche 1 bis 3, **dadurch gekennzeichnet, dass** die steife Lage und der steife Träger ein einheitliches Teil bilden.

6. Außenbesohlung (33) nach einem der vorhergehenden Ansprüche, **dadurch gekennzeichnet, dass** die Steifigkeit der steifen Lage (3321) wenigstens fünfmal größer als die Steifigkeit eines und/oder der zwei Flügel (3322L, 3322M) des steifen Trägers (3322) ist.

7. Außenbesohlung (33) nach einem der vorhergehenden Ansprüche, **dadurch gekennzeichnet, dass** der eine und/oder die zwei Flügel (3322L, 3322M) des steifen Trägers (3322) von einem thermoplastischen Polymer aus den folgenden gebildet sind: einem Polyamid (PA), einem thermoplastischen Polyurethan (TPU), oder einem Verbundmaterial, das aus einer thermoplastischen/wärmehärtbaren Matrix (PA, TPU, Epoxid...) in Kombination mit Fasern (Glas, Kohle, Leinen...) zusammengesetzt ist.

8. Außenbesohlung (33) nach einem der vorhergehenden Ansprüche, **dadurch gekennzeichnet, dass** die Unterkante eines und/oder der zwei Flügel (3322L, 3322M) des steifen Trägers (3322) um einen Abstand (Hi), der immer größer als fünf Millimeter ist, von der Kante der Unterseite (33D) der Außenbesohlung (33) beabstandet ist.

9. Außenbesohlung (33) nach einem der vorhergehenden Ansprüche, **dadurch gekennzeichnet, dass** die Oberkante eines und/oder der zwei Flügel (3322L, 3322M) des steifen Trägers (3322) um einen Abstand (Hs), der immer größer als acht Millimeter ist, von der Kante der Oberseite (33U) der Außenbesohlung (33) beabstandet ist.

10. Außenbesohlung (33) nach einem der vorhergehenden Ansprüche, **dadurch gekennzeichnet, dass** der steife Träger (3322) einen Abschnitt (33222, 33223) umfasst, der zwischen die obere Dämpfungsschicht (331) und eine hintere untere Dämpfungsschicht (3331, 333) eingefügt ist.

11. Außenbesohlung (33) nach einem der vorhergehenden Ansprüche, **dadurch gekennzeichnet, dass** wenigstens ein Flügel (3322L, 3322M) des steifen Trägers (3322) einen Rand (33222) umfasst, der sich im Wesentlichen horizontal von der Unterkante des Flügels (3322L, 3322M) zur Mitte der Besohlung hin erstreckt.

12. Außenbesohlung (33) nach einem der vorhergehenden Ansprüche, **dadurch gekennzeichnet, dass** die Unterseite (33D) der Außenbesohlung (33) Folgendes aufweist
- einen ersten, hinteren konvexen Abschnitt (33D1) im Bereich der Ferse, der einen hinteren Kontaktbereich (33D1S) mit dem Boden definiert, wenn die Sohle flach auf den Boden aufgesetzt ist. Dieser hintere Kontaktbereich (33D1S) liegt in Form eines quer verlaufenden Kontaktstreifens mit einer Breite kleiner als zwanzig Millimeter in der Längsrichtung X der Außenbesohlung vor. Die Mitte des hinteren Kontaktbereichs (33D1S) ist in einem hinteren Auflagebereich (Za1) positioniert, der sich zwischen 10 % und 25 % der Schaftlänge (L2) ab dem hinteren Ende (3311R) der oberen Schnittstellenfläche (3311) befindet,
- einen zweiten, vorderen konvexen Abschnitt (33D2) im Bereich des Vorderfußes, der einen vorderen Kontaktbereich (33D2S) mit dem Boden definiert, wenn die Sohle flach auf den Boden aufgesetzt ist. Dieser vordere Kontaktbereich (33D2S) liegt in Form eines quer verlaufenden Kontaktstreifens mit einer Breite kleiner als zwanzig Millimeter in der Längsrichtung X der Außenbesohlung vor. Die Mitte des vorderen Kontaktbereichs (33D2S) ist in einem vorderen Auflagebereich (Za2) positioniert, der sich zwischen 35 % und 50 % der Schaftlänge (L2) ab dem hinteren Ende (3311F) der oberen Schnittstellenfläche (3311) befindet.

13. Außenbesohlung (33) nach einem der vorhergehenden Ansprüche, **dadurch gekennzeichnet, dass** die untere Dämpfungsschicht (333) eine vordere untere Dämpfungsschicht (3332) und eine hintere Dämpfungsschicht (3331) beinhaltet, die miteinander verbunden sind, um ein einzelnes einstückiges Teil zu bilden.

14. Sportschuh (1), der mit einer Außenbesohlung (33) nach einem der vorhergehenden Ansprüche ausgestattet ist.

## Claims

1. Outsole (33) for a shoe (1) comprising an upper shock-absorbing layer (331) comprising an interface surface (3311) interfacing with an upper (2) of the shoe, the interface surface (3311) extending along a length-of-upper (L2) between an anterior end (3311F) and a posterior end (3311R), the outsole comprising a rigid leaf (3321) having an elastic modulus higher than 750 MPa interposed between the upper shock-absorbing layer (331) and a lower shock-absorbing layer (333, 3332), the rigid leaf being arranged at least partly in an anterior half of the outsole,
**characterized in that** it comprises a rigid support (3322) having an elastic modulus higher than 100 MPa, comprising
• a lower bridge (33221) covering part of the lower surface (331D) of the upper shock-absorbing layer (331), the lower bridge extending substantially over the entire width (W331) of this upper shock-absorbing layer in at least one transverse segment of a central zone (Zc) located at between 30% and 50% of the length-of-upper (L2), from the posterior end (3311R) of the interface surface (3311),
• a lateral wing (3322L) covering part of the lateral surface (331L) of the upper shock-absorbing layer (331), the covering portion covering at least a strip of a width (HL) of at least ten millimetres, this strip extending lengthwise, towards the rear, from the lower bridge (33221) at least as far as a frontal plane (PL) of the outsole that is distant, by 20% of the length-of-upper (L2), from the posterior end (3311R) of the interface surface (3311).

2. Outsole (33) according to Claim 1, **characterized in that** the rigid support (3322) also comprises a medial wing (3322M) covering at least part of the medial surface (331M) of the upper shock-absorbing layer (331), located at between 30% and 50% of the length-of-upper (L2), from the posterior end (3311R) of the interface surface (3311), the covering part extending up along the medial surface (331M) of the upper shock-absorbing layer (331), at least locally, over a height (HTM) of at least ten millimetres from the lower bridge (33221).

3. Outsole (33) according to one of the preceding claims, **characterized in that** the rigid support (3322) also comprises a medial wing (3322M) covering part of the medial surface (331M) of the upper shock-absorbing layer (331), the covering portion covering at least a strip of a width (HM) of at least ten millimetres, this strip extending lengthwise, towards the rear, from the lower bridge (33221) at least as far as a frontal plane (PM) of the outsole that is distant, by 20% of the length-of-upper (L2), from the posterior end (3311R) of the interface surface (3311).

4. Outsole (33) according to one of the preceding claims, **characterized in that** the rigid leaf and the rigid support are secured to one another.

5. Outsole (33) according to one of Claims 1 to 3, **characterized in that** the rigid leaf and the rigid support form a single component.

6. Outsole (33) according to one of the preceding claims, **characterized in that** the stiffness of the rigid leaf (3321) is at least five times greater than the stiffness of one and/or both of the two wings (3322L, 3322M) of the rigid support (3322).

7. Outsole (33) according to one of the preceding claims, **characterized in that** one and/or both of the two wings (3322L, 3322M) of the rigid support (3322) are made of a thermoplastic polymer from among: a polyamide (PA), a thermoplastic polyurethane (TPU) or composite material made up of a thermoplastic/thermosetting matrix (PA, TPU, epoxy, etc.) combined with fibres (made of glass, carbon, flax, etc.).

8. Outsole (33) according to one of the preceding claims, **characterized in that** the lower edge of one and/or both of the two wings (3322L, 3322M) of the rigid support (3322) is distant from the edge of the lower face (33D) of the outsole (33) by a distance (Hi) that is always greater than five millimetres.

9. Outsole (33) according to one of the preceding claims, **characterized in that** the upper edge of one and/or both of the two wings (3322L, 3322M) of the rigid support (3322) is distant from the edge of the upper face (33U) of the outsole (33) by a distance (Hs) that is always greater than eight millimetres.

10. Outsole (33) according to any one of the preceding claims, **characterized in that** the rigid support (3322) has a part (33222, 33223) interposed between the upper shock-absorbing layer (331) and a rear lower shock-absorbing layer (3331, 333).

11. Outsole (33) according to one of the preceding claims, **characterized in that** at least one wing (3322L, 3322M) of the rigid support (3322) comprises a flange (33222) extending substantially horizontally towards the centre of the bottom assembly from the lower edge of the wing (3322L, 3322M).

12. Outsole (33) according to one of the preceding claims, **characterized in that** the lower face (33D) of the outsole (33) has
- a rear convex first part (33D1) at the heel, defining a rear contact zone (33D1S) for contact with the ground when the sole is placed flat on the ground. This rear contact zone (33D1S) takes the form of a transverse contact strip of a width less than twenty millimetres, in the longitudinal direction X of the outsole. The centre of the rear contact zone (33D1S) is positioned in a rear pressure zone (Za1) located between 10% and 25% of the length-of-upper (L2) from the posterior end (3311R) of the upper interface surface (3311),
- a front convex second part (33D2) at the forefoot, defining a front contact zone (33D2S) for contact with the ground when the sole is placed flat on the ground. This front contact zone (33D2S) takes the form of a transverse contact strip of a width less than twenty millimetres, in the longitudinal direction X of the outsole. The centre of the front contact zone (33D2S) is positioned in a front pressure zone (Za2) located between 35% and 50% of the length-of-upper (L2) from the anterior end (3311F) of the upper interface surface (3311).

13. Outsole (33) according to one of the preceding claims, **characterized in that** the lower shock-absorbing layer (333) comprises a front lower shock-absorbing layer (3332) and a rear shock-absorbing layer (3331) which are connected to one another to form one single one-piece component.

14. Sports shoe (1) equipped with an outsole (33) as defined in one of the preceding claims.
